# EUROPÄISCHE PATENTANMELDUNG

(11) **EP 2 410 317 A1**
(43) Veröffentlichungstag der Anmeldung: **25.01.2012**
(21) Anmeldenummer: 10169388.5
(22) Anmeldetag: 13.07.2010
(51) Int. Cl.: G01N 21/94, G01N 1/02

(54) **Verfahren zum Beurteilen von an einem Körper anhaftenden Partikeln**

(71) Anmelder: Krämer AG Bassersdorf, 8303 Bassersdorf (CH)
(72) Erfinder: Heller, Roger, 8484, Weisslingen (CH); Buob, Stefan, 8404, Winterthur (CH)
(74) Vertreter: AMMANN PATENTANWÄLTE AG BERN

(57) **Zusammenfassung**

Das Verfahren löst die Aufgabe, an einem Körper (1) anhaftende Partikel (3) zuverlässig zu beurteilen. Dazu werden Partikel vom Körper (1) auf einen Prüfkörper (2) übertragen und dort beurteilt. Damit lässt sich beispielsweise die Leistung von Entstaubern für beispielsweise pharmazeutische Tabletten zuverlässig und mit hoher Wiederholgenauigkeit bestimmen.

## Beschreibung

Die Erfindung betrifft ein Verfahren zum Beurteilen von an einem Körper anhaftenden Partikeln.

Unter dem Begriff Beurteilen soll im vorliegenden Zusammenhang beispielsweise das Zählen der Anzahl Partikel auf einer definierten Fläche, das Messen der Grösse der Partikel und/oder das Erfassen der Verteilung der Partikel auf der Fläche verstanden werden.

Es sind Verfahren und Geräte zum Prüfen von Körpern wie beispielsweise Tabletten oder Kapseln bekannt, bei denen beispielsweise die Festigkeit der Körper gemessen oder deren Oberfläche auf Risse oder anhaftende Verschmutzungen geprüft wird. Dabei werden auch Methoden der Bildverarbeitung eingesetzt. Wenn es aber darum geht, die Qualität von Körpern an Hand von auf der Oberfläche der Körper lose anhaftenden Partikeln aus dem gleichen Material, aus dem die Körper bestehen, zu prüfen, kommen herkömmliche Prüfmethoden rasch an ihre Grenzen, weil die Partikel und die Körper die gleiche Farbe haben und daher die Partikel auf Grund des geringen Kontrastes kaum erkannt werden können. Aufgrund der selben Materialbeschaffenheit weisen die Partikel auch eine nahezu identische Dichte wie die Körper auf, was ebenfalls die Prüfung erschwert.

Der Erfindung liegt die Aufgabe zu Grunde, ein Verfahren anzugeben, mit dem an einem Körper anhaftende Partikel zuverlässig beurteilt werden können. Ausserdem soll das Verfahren zumindest weitgehend automatisierbar sein.

Gelöst wird diese Aufgabe dadurch, dass Partikel vom Körper auf einen Prüfkörper übertragen und dort beurteilt werden.

Diese Lösung hat insbesondere den Vorteil, dass die Beurteilung nicht am Körper selbst erfolgt, sondern am Prüfkörper. Dies erlaubt es, die Eigenschaften des Prüfkörpers nahezu beliebig zu wählen und damit an die zu beurteilenden Körper und die gewählte Beurteilungsmethode anzupassen.

Nach einer Ausführungsart hat der Prüfkörper eine von der Farbe des Körpers abweichende Farbe, vorzugsweise eine Kontrastfarbe. Dadurch sind die Partikel auf dem Prüfkörper gut erkennbar.

Eine weitere Ausführungsart sieht vor, dass der Prüfkörper aus einem plastisch oder elastisch verformbaren Material besteht. Dadurch kann sich der Prüfkörper der Oberfläche des Körpers anpassen, insbesondere auch wenn diese Oberfläche gewölbt ist.

Gemäss einer anderen Ausführungsart besteht der Prüfkörper aus Kunststoff, Gummi oder Naturkautschuk. Diese Materialien haben sich bei Versuchen gut bewährt.

Nach einer weiteren Ausführungsart hat der Prüfkörper die Form einer Membrane. Eine Membrane lässt sich beispielsweise über einen hohlen Stützkörper spannen, wodurch bei der Übertragung der Partikel eine hohe Wiederholgenauigkeit erreicht wird.

Gemäss einer weiteren Ausführungsart erfolgt die Übertragung der Partikel auf den Prüfkörper durch eine elektrostatische Potentialdifferenz. Dies kann durch eine Spannungsquelle oder aber auch beispielsweise durch Reiben des Prüfkörpers erreicht werden.

Nach einer anderen Ausführungsart ist vorgesehen, dass die Übertragung der Partikel auf den Prüfkörper durch eine Berührung zwischen dem Körper und dem Prüfkörper erfolgt. So lässt sich die Übertragung sehr einfach durch eine Art Abtupfen des Körpers mit dem Prüfkörper oder umgekehrt des Prüfkörpers mit dem Körper erreichen.

Um nach der Übertragung die Haftung der Partikel auf dem Prüfkörper zu verbessern, kann dessen Oberfläche nach einer weiteren Ausführungsart mit einem Haftklebestoff beschichtet sein.

Nach einer Ausführungsart des Verfahrens erfolgt die Beurteilung der Partikel durch Auswertung eines Ausschnitts des Prüfkörpers mit den darauf übertragenen Partikeln. Wenn der Ausschnitt grösser gewählt wird als der Körper, lässt sich an Hand der Verteilung der Partikel auch die Geometrie des Körpers beurteilen.

Gemäss einer weiteren Ausführungsart wird von dem Ausschnitt ein digitales Bild erstellt und dieses elektronisch ausgewertet. Somit lässt sich einerseits die Subjektivität, die einer Beurteilung durch eine Person immer anhaftet, eliminieren und andererseits lässt sich das Verfahren automatisieren.

Nach einer anderen Ausführungsart umfasst die Auswertung die Bestimmung des Verhältnisses der Summe der Projektionsflächen der Partikel zur gesamten Fläche des Ausschnitts. Damit lassen sich beispielsweise äusserst einfach Vergleiche zwischen verschiedenen Proben erstellen.

Eine andere Ausführungsart sieht vor, dass die Auswertung die Bestimmung der Grössenverteilung der Partikel umfasst. Die Grössenverteilung kann beispielsweise interessieren, wenn es darum geht, die Qualität von Presskörpern zu beurteilen oder die Leistung eines Entstaubers zu optimieren.

Gemäss einer weiteren Ausführungsart umfasst die Auswertung die Bestimmung der Verteilung der Partikel auf dem Ausschnitt des Prüfkörpers und daraus werden Formfehler oder Beschädigungen des Körpers abgeleitet. Gerade bei einem automatisierten Verfahren kann es interessant sein, neben der Partikelbestimmung gleichzeitig auch fehlerhafte Körper detektieren.

Nach einer anderen Ausführungsart erfolgt bei ein und demselben Körper die Übertragung der Partikel so oft mit jeweils einem neuen Prüfkörper, bis auf dem Prüfkörper keine Partikel mehr festgestellt werden und die Anzahl Übertragungen, bei denen auf dem Prüfkörper Partikel festgestellt wurden, wird als ein Mass für die Staubbelastung des Körpers verwendet. Somit lässt sich sehr einfach der an einem Körper anhaftende Staub bestimmen und durch eine Zahl ausdrücken.

Schliesslich ist nach einer Ausführungsart der Körper ein Presskörper, insbesondere eine pharmazeutische Tablette oder eine Kapsel.

Ein anderer Aspekt der Erfindung betrifft eine Vorrichtung mit einem Prüfkörper zur Durchführung des erfindungsgemässen

Verfahrens. Diese hat zur Aufgabe, die Übertragung von Partikeln auf Prüfkörper in einfacher Weise und mit hoher Wiederholgenauigkeit auszuführen.

Diese Aufgabe wird dadurch gelöst, dass der Prüfkörper als eine über einen hohlen Stützkörper gespannte elastische Membrane ausgebildet ist. Diese Anordnung hat insbesondere den Vorteil, dass sich die Membrane beim Kontakt mit einem zu prüfenden Körper elastisch über dessen Oberfläche spannt und dass dadurch mit der Vorrichtung auch Körper mit gewölbten Oberflächen beurteilt werden können.

Nach einer Ausführungsart ist ein lösbar angeordneter Haltekörper vorgesehen, der die Membrane am Stützkörper und diesen in einem Halter festhält. Dieser einfache Aufbau ermöglicht ein unkompliziertes Austauschen der Membrane.

Gemäss einer weiteren Ausführungsart sind im Halter mehrere Stützkörper, Haltekörper und Membranen aufgenommen. Somit lassen sich mit der Vorrichtung mehrere Partikelübertragungen nacheinander vornehmen, bevor die Beurteilung erfolgt.

Schliesslich sieht eine weitere Ausführungsart vor, dass die Vorrichtung eine Führung aufweist, die eine Basis und eine darauf angeordnete Aufnahme für einen Körper aufweist und dass der Halter in der Führung gegen die Aufnahme hin beweglich ist. Damit lassen sich Abdrücke unter immer gleichen Bedingungen erstellen.

Ausführungsbeispiele der Erfindung werden nachstehend unter Bezugnahme auf die angefügten Zeichnungen beispielsweise näher beschrieben. Es zeigt
- Figur 1: schematisch eine Bewertungsanordnung,
- Figur 2: eine erste Abbildung eines Abdrucks,
- Figur 3: eine zweite Abbildung eines Abdrucks,
- Figur 4: ein Diagramm der Pixelzahl abhängig vom Grauwert,
- Figur 5: einen Längsschnitt durch eine Vorrichtung zur Durchführung des erfindungsgemässen Verfahrens und
- Figur 6: ein Flussdiagramm der Vorgänge bei einem Ausführungsbeispiel des erfindungsgemässen Verfahrens.

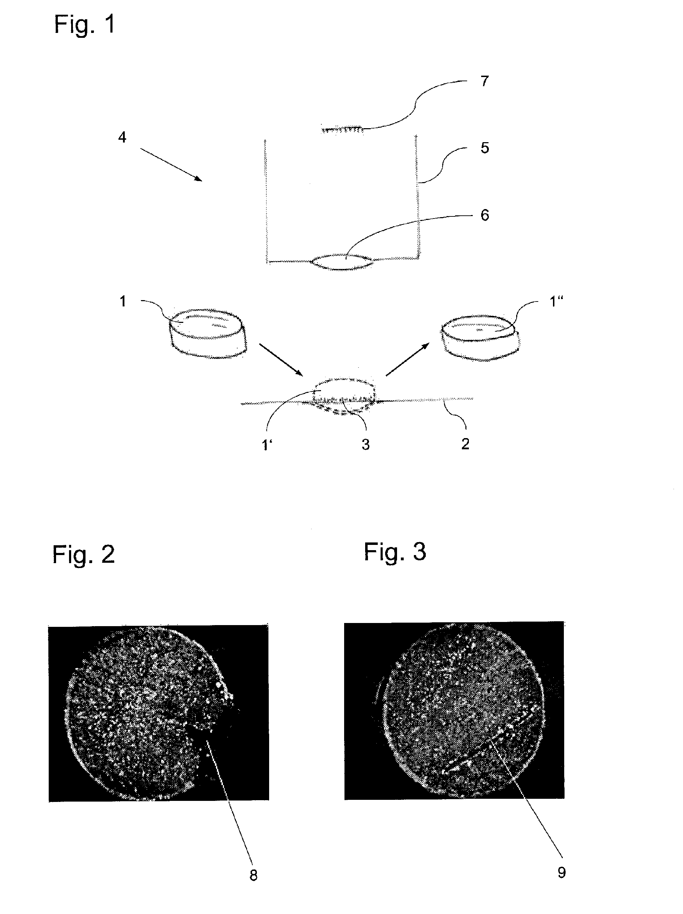

Figur 1 zeigt beispielsweise und schematisch eine Anordnung zum Bewerten von an einem Körper anhaftenden Partikeln. Der Körper ist im Beispiel eine pharmazeutische Tablette 1. Diese Tablette wird mit einer elastischen Membrane 2 in Kontakt gebracht, wobei sie die in der Figur mit 1' bezeichnete Lage einnimmt. Wie die Figur deutlich zeigt, passt sich dabei die Membrane 2 unter elastischer Verformung genau an die Oberfläche der Tablette 1 an, selbst wenn diese Oberfläche gewölbt ist. Als Material für die Membrane 2 hat sich in Versuchen beispielsweise eine dünne Haut aus Kautschuk bewährt, wie er für die Herstellung von Luftballons verwendet wird. Vorteilhaft hat die Membrane 2 eine Farbe, die im Kontrast zur Farbe der Tablette 1 steht. Im Beispiel ist die Membrane 2 schwarz und die Tablette 1 weiss. Nachdem die Tablette in die mit 1 " bezeichnete Position gebracht wurde, verbleibt auf der Membrane 2 ein Abdruck aus Partikeln 3, die sich zuvor auf der Oberfläche der Tablette 1 befunden hatten. Diese Partikel haften an der Membrane 2 vermutlich durch mechanische Adhäsion. Um die Haftung der Partikel 3 auf der Membrane 2 zu verbessern, kann die Membrane 2 mit einem Haftklebestoff beschichtet werden, wie er etwa bei Klebebändern verwendet wird. Gemäss einer Ausführungsart des erfindungsgemässen Verfahrens wird von dem den Abdruck enthaltenden Bereich der Membrane 2 ein Bild, vorzugsweise eine Digitalaufnahme erstellt. Dazu ist in Figur 1 eine Kamera 4 schematisch angedeutet, welche ein Gehäuse 5, eine Linse 6 und einen lichtempfindlichen Sensor 7, beispielsweise einen CCD-Sensor enthält.

Die Figuren 2 und 3 zeigen je einen Ausschnitt der schwarzen Membrane 2 mit daran anhaftenden weissen Partikeln. Diese Partikel können nun visuell oder automatisch beispielsweise nach Anzahl pro Fläche, Form, Grösse, Verteilung, Grössenverteilung etc. beurteilt werden, beispielsweise um die Wirksamkeit eines vorgängig von den Tabletten 1 durchlaufenen Entstaubers zu prüfen. Wie die Figuren 2 und 3 zeigen, können darüber hinaus am Abdruck auch Fehler der Geometrie der Tablette 1 wie beispielsweise eine Abbruchstelle 8 (Figur 2) oder ein Kratzer 9 (Figur 3) erkannt werden.

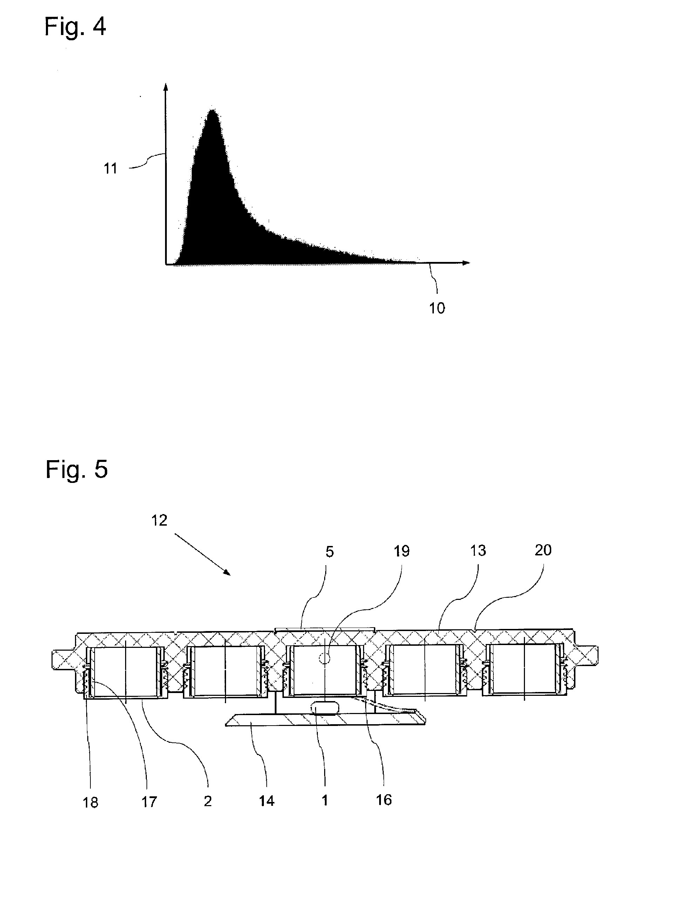

Figur 4 zeigt in einem Diagramm ein Beispiel einer Auswertung eines durch die Kamera 4 aufgenommenen Bildes eines Abdrucks einer Tablette 1. Im Beispiel ist auf der Horizontalachse 10 der Grauwert und auf der Vertikalachse 11 die Pixelzahl aufgetragen. Eine solche Auswertung lässt sich automatisch durch einen Computer und ein entsprechendes Programm erstellen. In gleicher Weise kann beispielsweise auch die Verteilung der Partikel über die Messfläche ausgewertet werden, wodurch sich Geometriefehler der Tabletten 1 detektieren lassen.

Figur 5 zeigt eine längs geschnittene Ansicht einer Vorrichtung 12 zur Durchführung des erfindungsgemässen Verfahrens. Die Vorrichtung 12 dient zum manuellen Erzeugen von Abdrücken und umfasst einen Halter 13, der so dimensioniert ist, dass er in die menschliche Hand passt, damit einfach Abdrücke erfasst werden können.

Im Halter 13 sind im Beispiel fünf zylindrische Öffnungen vorgesehen, in denen jeweils eine Hülse 17 aufgenommen ist. Über jede Hülse 17 ist eine Membrane 2 gespannt und mittels eines Haltering 18 festgehalten, welcher gleichzeitig die Hülse 17 in der genannten Öffnung fixiert. Um die Qualität der Abdrücke zu verbessern und eine einheitliche Position auf der Membrane 2 zu ermöglichen, hat die Vorrichtung 12 einen Fuss 14 mit einer Mulde zur Aufnahme einer Tablette 1. Eine Art Portal 15 dient zur Führung des Halters 13 und Positionierungsmarken 20 zeigen an, wenn eine Membran 2 zentrisch über der Tablette 1 positioniert ist. Vorteilhaft sind seitlich im Portal 15 Führungsstifte 19 vorgesehen, die mit entsprechenden Führungsnuten (nicht dargestellt) im Halter 13 zusammenwirken und eine geführte Absenkbewegung des Halters 13 Richtung Tablette 1 nur erlauben, wenn Die Membrane 2 genau über der Tablette 1 positioniert ist. Ausgehend von der in Figur 5 dargestellten Position wird der Halter 13 manuell nach unten gedrückt, bis die Membrane 2 am Fuss 14 ansteht, wobei sich die Membrane 2 über die Tablette 1 spannt. Nach dem Loslassen des Trägers 13 wird dieser durch die Kraft einer Feder 16 wieder in die dargestellte Position gehoben. Danach wird der Halter 13 in der Figur horizontal verschoben, bis eine benachbarte Membrane 2 über der Tablette 1 positioniert ist.

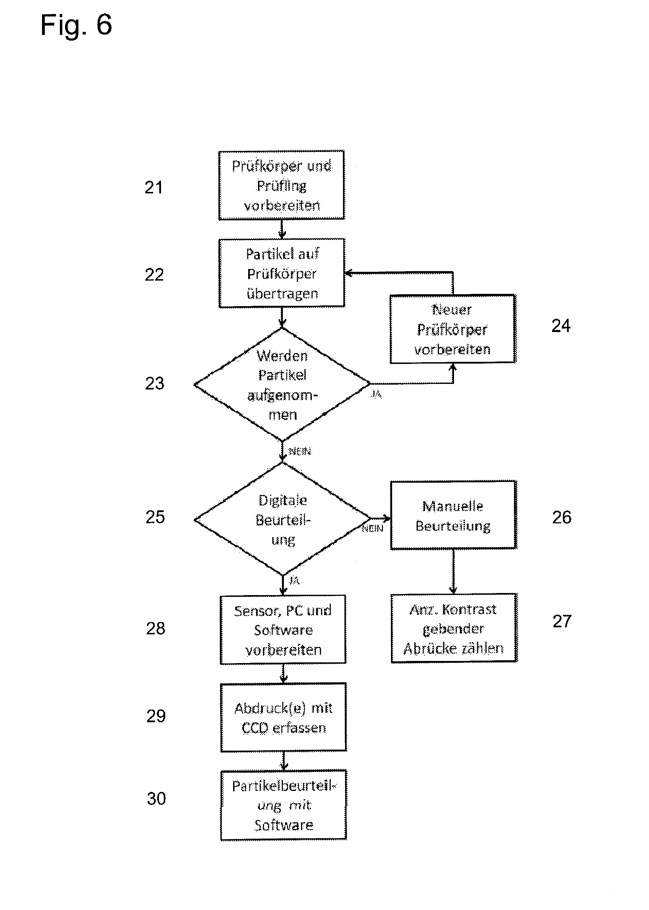

An Hand des im Flussdiagremm gemäss Figur 6 dargestellten Ablaufs werden nun Ausführungsbeispiele des erfindungsgemässen Verfahrens beschrieben. Position 21 steht für die Vorbereitung des Prüfkörpers, das ist in der vorangehenden Beschreibung die Membrane 2 und des zu prüfenden Körpers, das ist in der vorangehenden Beschreibung die Tablette 1. Bei 22 werden Partikel auf den Prüfkörper übertragen, beispielsweise mit der an Hand der Figur 5 beschriebenen Vorrichtung. Bei 23 wird geprüft, ob Partikel auf der Membrane 2 sichtbar sind. Diese Prüfung kann visuell durch eine Person oder automatisch durch eine optische Vorrichtung wie eine Kamera 4 ausgeführt werden. Wenn auf dem Prüfkörper Partikel erkennbar sind, wird ein neuer Prüfkörper vorbereitet, wie dies durch Position 24 gezeigt ist. Bei Verwendung der Vorrichtung gemäss Figur 5 wird der Halter 13 um eine Position vorgeschoben. Bei 25 wird entschieden, ob der Abdruck digital, das heisst hier elektronisch beurteilt werden soll. Eine sehr einfache Ausführungsart des Verfahrens kommt ohne elektronische Beurteilung aus, wie Position 26 "manuelle Beurteilung" zeigt. Dabei werden von ein und demselben Körper so lange Abdrücke genommen werden, bis auf dem Prüfkörper keine Partikel mehr erkennbar sind. Die Anzahl Kontrast gebender der Abdrücke (27) kann als einfaches Mass für vor dem ersten Abdruck am Körper anhaftenden Partikel und damit beispielsweise für die Qualität einer vorangehend durchgeführten Entstaubung genommen werden.

Bei der Ausführungsart der elektronischen Beurteilung der Abdrücke wird bei 28 der Sensor bzw. die Kamera 4, ein mit der Kamera 4 verbundener Rechner und eine auf dem Rechner installierte Software vorbereitet. Die Kamera 4 ist dabei beispielsweise mit einer Distanzhülse ausgestattet, die auf den Haltering 18 passt, so dass die Kamera nicht vor jeder Aufnahme neu fokussiert werden muss. Die Distanzhülse kann transparent sein, um den Durchtritt von Licht in ihr Inneres zu gestatten oder sie kann mit einer Lichtquelle ausgestattet sein, um für jede Aufnahme gleiche Beleuchtungsbedingungen zu gewährleisten. Bei 29 erfolgt die Erfassung des Abdrucks mit dem Sensor 7 der Kamera 4 und bei 30 die Partikelbeurteilung durch die genannte Software.

Das erfindungsgemässe Verfahren ist unter anderem bei der Produktion von Tabletten verwendbar, insbesondere zur Überprüfung der Wirksamkeit von Vorrichtungen zum Entstauben und Entgraten der Tabletten. Möglichst staubfreie Tabletten werden beispielsweise aus optischen Gründen angestrebt, insbesondere wenn diese Tabletten in Blister verpackt werden. Aber auch bei Tabletten, die mit einer Schicht überzogen werden, ist eine möglichst staubfreie Oberfläche wichtig, weil sonst die Schicht schlecht haften und/oder unansehnlich aussehen könnte.

### Bezugszeichenliste

- 1, 1', 1": Tablette
- 2: Membrane
- 3: Partikel
- 4: Kamera
- 5: Gehäuse
- 6: Linse
- 7: Sensor
- 8: Abbruchstelle
- 9: Kratzer
- 10: Horizontalachse
- 11: Vertikalachse
- 12: Vorrichtung
- 13: Halter
- 14: Fuss
- 15: Portal
- 16: Feder
- 17: Hülse
- 18: Haltering
- 19: Führungsstift
- 20: Positionierungsmarken
- 21: Prüfkörper und Prüfling vorbereiten
- 22: Partikel auf Prüfkörper übertragen
- 23: Werden Partikel aufgenommen?
- 24: Neuen Prüfkörper vorbereiten
- 25: Digitale Beurteilung
- 26: Manuelle Beurteilung
- 27: Anz. Kontrast gebender Abdrücke zählen
- 28: Sensor, PC und Software vorbereiten
- 29: Abdruck mit CCD erfassen
- 30: Partikelbeurteilung mit Software

## Patentansprüche

1. Verfahren zum Beurteilen von an einem Körper anhaftenden Partikeln, **dadurch gekennzeichnet, dass** Partikel vom Körper auf einen Prüfkörper übertragen und dort beurteilt werden.

2. Verfahren nach Anspruch 1, **dadurch gekennzeichnet, dass** der Prüfkörper eine von der Farbe des Körpers abweichende Farbe, vorzugsweise eine Kontrastfarbe hat.

3. Verfahren nach einem der vorangehenden Ansprüche, **dadurch gekennzeichnet, dass** der Prüfkörper aus einem plastisch oder elastisch verformbaren Material besteht.

4. Verfahren nach Anspruch 3, **dadurch gekennzeichnet, dass** der Prüfkörper aus Kunststoff, Gummi oder Naturkautschuk besteht.

5. Verfahren nach einem der Ansprüche 3 bis 4, **dadurch gekennzeichnet, dass** der Prüfkörper die Form einer Membrane hat.

6. Verfahren nach einem der vorangehenden Ansprüche, **dadurch gekennzeichnet, dass** die Übertragung der Partikel auf den Prüfkörper durch eine elektrostatische Potentialdifferenz erfolgt.

7. Verfahren nach einem der Ansprüche 1 bis 5, **dadurch gekennzeichnet, dass** die Übertragung der Partikel auf den Prüfkörper durch eine Berührung zwischen dem Körper und dem Prüfkörper erfolgt.

8. Verfahren nach einem vorangehenden Ansprüche, **dadurch gekennzeichnet, dass** die Oberfläche des Prüfkörpers mit einem Haftklebestoff beschichtet ist.

9. Verfahren nach einem vorangehenden Ansprüche, **dadurch gekennzeichnet, dass** die Beurteilung der Partikel durch Auswertung eines Ausschnitts des Prüfkörpers mit den darauf übertragenen Partikeln erfolgt.

10. Verfahren nach Anspruch 9, **dadurch gekennzeichnet, dass** von dem Ausschnitt ein digitales Bild erstellt und dieses elektronisch ausgewertet wird.

11. Verfahren nach einem der Ansprüche 9 bis 10, **dadurch gekennzeichnet, dass** die Auswertung die Bestimmung des Verhältnisses der Summe der Projektionsflächen der Partikel zur gesamten Fläche des Ausschnitts umfasst.

12. Verfahren nach einem der Ansprüche 9 bis 11, **dadurch gekennzeichnet, dass** die Auswertung die Bestimmung der Grössenverteilung der Partikel umfasst.

13. Verfahren nach einem der Ansprüche 8 bis 12, **dadurch gekennzeichnet, dass** die Auswertung die Bestimmung der Verteilung der Partikel auf dem Ausschnitt des Prüfkörpers umfasst und dass daraus Formfehler oder Beschädigungen des Körpers abgeleitet werden.

14. Verfahren nach einem der vorangehenden Ansprüche, **dadurch gekennzeichnet, dass** bei ein und demselben Körper die Übertragung der Partikel so oft mit jeweils einem neuen Prüfkörper erfolgt, bis auf dem Prüfkörper keine Partikel mehr festgestellt werden und dass die Anzahl Übertragungen, bei denen auf dem Prüfkörper Partikel festgestellt wurden, als ein Mass für die Staubbelastung des Körpers verwendet wird.

15. Verfahren nach einem der vorangehenden Ansprüche, **dadurch gekennzeichnet, dass** der Körper ein Presskörper, insbesondere eine pharmazeutische Tablette oder eine Kapsel ist.

16. Vorrichtung zur Durchführung des Verfahrens nach einem der Ansprüche 1 bis 15, enthaltend mindestens einen Prüfkörper (2), **dadurch gekennzeichnet, dass** der Prüfkörper als eine über einen hohlen Stützkörper (17) gespannte elastische Membrane (2) ausgebildet ist.

17. Vorrichtung nach Anspruch 16, **gekennzeichnet durch** einen lösbar angeordneten Haltekörper (18), der die Membrane (2) am Stützkörper (17) und diesen in einem Halter (13) festhält.

18. Vorrichtung nach einem der Ansprüche 16 bis 17, **dadurch gekennzeichnet, dass** im Halter (13) mehrere Stützkörper (17), Haltekörper (18) und Membranen (2) aufgenommen sind.

19. Vorrichtung nach einem der Ansprüche 16 bis 18 **dadurch gekennzeichnet, dass** sie eine Führung (15) aufweist, die eine Basis (14) und eine darauf angeordnete Aufnahme für einen Körper (1) aufweist und dass der Halter (13) in der Führung (15) gegen die Aufnahme hin beweglich ist.
